(19) Europäisches Patentamt
European Patent Office
Office européen des brevets

(11) EP 4 691 797 A1

(12) EUROPEAN PATENT APPLICATION

(43) Date of publication:
**11.02.2026 Bulletin 2026/07**

(21) Application number: **24192892.8**

(22) Date of filing: **05.08.2024**

(51) International Patent Classification (IPC):
***B60C 1/00*** *(2006.01)* ***C08L 15/00*** *(2006.01)*
***C08L 47/00*** *(2006.01)* ***C08K 3/36*** *(2006.01)*
*C08L 7/00* *(2006.01)* *C08L 9/00* *(2006.01)*
*C08L 91/00* *(2006.01)*

(52) Cooperative Patent Classification (CPC):
(C-Sets available)
**B60C 1/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bridgestone Europe NV/SA**
**1930 Zaventem (BE)**

(72) Inventors:
- **SPIEZIA, Antonella**
  **00128 Rome (IT)**
- **DI CONSIGLIO, Micol**
  **00128 Rome (IT)**

(74) Representative: **Marks & Clerk LLP**
**15 Fetter Lane**
**London EC4A 1BW (GB)**

# (54) RUBBER COMPOSITION FOR A PNEUMATIC TYRE AND A PNEUMATIC TYRE PRODUCED THEREFROM

(57) A rubber composition for a pneumatic tyre comprising an elastomer having a low glass transition temperature and a terpenic resin and pneumatic tyres produced therefrom.

EP 4 691 797 A1

(52) Cooperative Patent Classification (CPC): (Cont.)

C-Sets
**C08L 15/00, C08L 9/06, C08L 47/00, C08L 91/00, C08L 91/08, C08L 45/00, C08K 3/36, C08K 3/36, C08K 3/04, C08K 5/548, C08K 3/22, C08K 5/09, C08K 5/098, C08K 3/06, C08K 5/31, C08K 5/40;**
**C08L 15/00, C08L 47/00, C08L 9/06, C08L 91/00, C08L 91/08, C08L 45/00, C08K 3/36, C08K 3/36, C08K 3/04, C08K 5/548, C08K 3/22, C08K 5/09, C08K 5/098, C08K 3/06, C08K 5/31, C08K 5/40**

## Description

### FIELD OF THE INVENTION

The present invention is directed to a rubber composition for a pneumatic tyre, the use of the rubber composition in the manufacture of a pneumatic tyre and pneumatic tyres comprising or prepared from the rubber composition. The pneumatic tyres are suitable for passenger-type motor vehicles.

### BACKGROUND TO THE INVENTION

Manufacturing pneumatic tyres having good performance in multiple different weather conditions poses a particular challenge for tyre designers. The tyres must provide balanced performance that makes them suitable for a range of driving conditions, including wet weather, dry conditions and winter conditions, on a range of surface types, while also providing long tread life. Achieving these aims involves balancing parameters including the softening temperature of the tyre (indicated by the glass transition temperature ($T_g$) of the elastomers in the compound) and its viscoelastic properties (indicated by the ratio between loss and storage modulus (tan$\delta$)). In particular, it can be a challenge to prepare tyres with good balance between wet performance and rolling resistance. Elastomers having a low $T_g$ can provide good grip at low temperatures. However, this effect needs to be balanced with other factors (e.g. filler and resin/plasticizer loading) to provide balance between wet performance and rolling resistance. As a result, pneumatic tyre designers must carefully choose the combination of elastomers, fillers and resins that make up the rubber compound. There remains a need in the art to provide pneumatic tyres that provide good balance between wet performance and rolling resistance.

The present invention aims to provide a solution to one or more of the problems identified above.

### SUMMARY OF THE INVENTION

The present inventors have discovered that certain resins enhance the dispersion of fillers in rubber compositions that comprise low $T_g$ elastomers, resulting in improved rolling resistance. In particular, the present inventors have discovered that terpenic resins having a $T_g$ of at least 30°C improve the compatibility and miscibility of low $T_g$ elastomers and resins providing a good balance between wet performance and rolling resistance. This effect can be improved by including a high proportion of terpenic resin compared to the amount of the low $T_g$ elastomer.

According to the above, in a first aspect, the present invention is directed to a rubber composition for a pneumatic tyre comprising:

an elastomer system comprising one or more elastomers, wherein the elastomer system comprises a first copolymer of styrene and butadiene (SBR) having a glass transition temperature ($T_g$) of from -90°C to -30°C and present in an amount of at least 40 phr, wherein the first SBR is functionalised with one or more functional groups selected from the group consisting of silane, alkoxysilane, aminosilane, silane-containing carboxyl, and silanol groups;
a filler system comprising a first silica having a CTAB surface area of at least 150 $m^2g^{-1}$; and,
a plasticizer system comprising a resin which is a terpenic resin having a glass transition temperature ($T_g$) of at least 30°C present in an amount of at least 30 phr;
wherein a ratio of the amount of the terpenic resin in phr to the amount of the first SBR in phr is at least 0.5:1.

In a second aspect, the present invention is directed to a pneumatic tyre comprising or prepared from the rubber composition described hereinabove.

In a third aspect, the present invention is directed to a use of the rubber composition described hereinabove in the manufacture of a pneumatic tyre.

Further advantageous features of the present invention are set out in the description of the invention below and the dependent claims.

### DETAILED DESCRIPTION OF THE INVENTION

Tyres prepared from elastomers having a low glass transition temperature ($T_g$) (e.g. <0°C) have improved grip at lower temperatures. However, increasing the amount of low $T_g$ elastomers in a rubber composition can negatively impact other parameters, including wet performance. The present inventors have discovered that certain resins enhance the dispersion of fillers in rubber compositions comprising low $T_g$ elastomers, resulting in improved rolling resistance. In particular, the present inventors have discovered that terpenic resins having a $T_g$ of at least 30°C improve the compatibility and miscibility of low $T_g$ elastomers and resins providing a good balance between wet performance and rolling resistance. This effect can be improved by including a high proportion of terpenic resin compared to the amount of the low $T_g$

elastomer. The present inventors have additionally discovered that hydrocarbon resins (e.g. hydrogenated or partially hydrogenated hydrocarbon resins) do not provide the same enhancement of wet performance and rolling resistance balance as terpenic resins.

According to the above, in a first aspect the present invention provides a rubber composition for a pneumatic tyre comprising:

an elastomer system comprising one or more elastomers, wherein the elastomer system comprises a first copolymer of styrene and butadiene (SBR) having a glass transition temperature ($T_g$) of from -90°C to -30°C and present in an amount of at least 40 phr, wherein the first SBR is functionalised with one or more functional groups selected from the group consisting of silane, alkoxysilane, aminosilane, silane-containing carboxyl, and silanol groups;
a filler system comprising a first silica having a CTAB surface area of at least 150 $m^2g^{-1}$; and,
a plasticizer system comprising a resin which is a terpenic resin having a glass transition temperature ($T_g$) of at least 30°C present in an amount of at least 30 phr; wherein a ratio of the amount of the terpenic resin in phr to the amount of the first SBR in phr is at least 0.5:1.

*Elastomers*

The terms "polymer", "copolymer", "elastomer" and rubber may be used interchangeably herein to describe the polymeric base material for the rubber compositions. These elastomers may be, for example, natural rubber, polybutadiene, synthetic polyisoprenes, butadiene copolymers, isoprene copolymers and mixtures thereof. The components of the rubber compositions are provided in parts per hundred rubber (phr), which means parts by weight per hundred parts of elastomer (or of the total elastomers if several elastomers are present). The term "rubber composition" may be used interchangeably with the term "rubber compound".

The first copolymer of styrene and butadiene (abbreviated as first SBR) may be an emulsion SBR or eSBR (i.e. an SBR prepared by emulsion polymerization) or a solution SBR or sSBR (i.e. an SBR prepared by solution polymerization). The $T_g$ of the first SBR may be from -90°C to -30°C, preferably from -80°C to -40°C, more preferably from - 70°C to -50°C, for example, -70°C, -65°C, -60°C, -55°C, or -50°C. In a specific embodiment, the $T_g$ of the first SBR may be -61°C. The first SBR may have a styrene content of from 5 to 15% by weight of the first SBR, preferably 10% by weight of the first SBR, and a vinyl content of from 30 to 40% by weight of the first SBR, preferably 37% by weight of the first SBR. The skilled person understands how the structure of the SBR may be modified to adjust the $T_g$ to the required value.

The first SBR is present in an amount of at least 40 phr. Preferably the first SBR is present in an amount of from 45 to 90 phr, preferably from 65 to 85 phr, for example 65, 70, 75, 80, or 85 phr.

The first SBR is functionalised with one or more functional groups selected from the group consisting of silane, alkoxysilane, aminosilane, silane-containing carboxyl, and silanol groups. The functional groups may be terminal groups, i.e. groups at the end of a polymer chain, or pendant groups, i.e. groups attached along the length of the polymer chain, or both. Preferably the first SBR is functionalised with terminal silane-containing carboxyl groups, i.e. wherein the functional group is terminated with a carboxyl group. These silane-containing carboxyl groups may have a structure according to Formula (I):

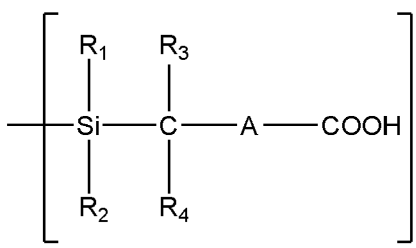

(I)

wherein:

$R_1$ and $R_2$ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
$R_3$ and $R_4$ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkylene radical; one or more heteroatoms selected from the group consisting of O, $NR_7$, S and $SiR_8R_9$; or, an alkylene radical containing one or more heteroatoms, preferably wherein

the heteroatoms are one or more selected from the group consisting of O, $NR_7$, S, and $SiR_8R_9$.

In Formula (I), $R_1$ and $R_2$ may each independently be a hydrogen, $C_1$ to $C_{12}$ linear or branched alkyl, $C_2$ to $C_{12}$ linear or branched alkenyl, $C_1$ to $C_{12}$ linear or branched alkoxy, $C_3$ to $C_{12}$ cycloalkyl, $C_2$ to $C_{12}$ cycloalkoxy, $C_6$ to $C_{12}$ aryl, $C_6$ to $C_{12}$ aryloxy, $C_7$ to $C_{14}$ arylalkyl, $C_7$ to $C_{14}$ alkylaryl, $C_6$ to $C_{24}$ alkylaryloxy, $C_5$ to $C_{24}$ aralkyl, or a $C_6$ to $C_{24}$ aralkoxy radical. Preferably, $R_1$ and $R_2$ may each independently be a $C_1$ to $C_6$ linear or branched alkyl, $C_2$ to $C_6$ linear or branched alkenyl, $C_1$ to $C_6$ linear or branched alkoxy, $C_3$ to $C_{12}$ cycloalkyl, $C_2$ to $C_{12}$ cycloalkoxy, or a $C_6$ to $C_{12}$ aryl radical. Preferably, $R_1$ and $R_2$ may each independently be a $C_1$ to $C_6$ linear or branched alkyl, $C_2$ to $C_6$ linear or branched alkenyl, $C_1$ to $C_6$ linear or branched alkoxy, or a $C_6$ to $C_{12}$ aryl radical. Preferably, $R_1$ and $R_2$ may each independently be a $C_1$ to $C_3$ linear or branched alkyl, $C_2$ to $C_3$ linear or branched alkenyl, $C_1$ to $C_3$ linear or branched alkoxy, or a $C_6$ aryl radical. For example, $R_1$ and $R_2$ may each independently be a methyl, tert-butyl, prop-1-enyl, ethoxy, or phenyl radical. More preferably, $R_1$ and $R_2$ are methyl radicals.

$R_3$ and $R_4$ may each independently be a hydrogen, $C_1$ to $C_{12}$ linear or branched alkyl, $C_3$ to $C_{12}$ cycloalkyl, $C_6$ to $C_{12}$ aryl, $C_5$ to $C_{24}$ aralkyl, or a $C_5$ to $C_{24}$ alkaryl radical. Preferably $R_3$ and $R_4$ may each independently be a hydrogen, $C_1$ to $C_6$ linear or branched alkyl, $C_2$ to $C_6$ linear or branched alkenyl, $C_1$ to $C_6$ linear or branched alkoxy, or a $C_6$ to $C_{12}$ aryl radical. More preferably, $R_3$ and $R_4$ may each independently be a hydrogen or methyl radical. In a particular embodiment, $R_3/R_4$ and "A" together form a $C_6$ aryl.

"A" may independently be a substituted or unsubstituted $C_1$ to $C_6$ linear alkyl radical; one or more heteroatoms selected from the group consisting of O, $NR_7$, S and $SiR_8R_9$; or, a substituted or unsubstituted $C_1$ to $C_6$ linear alkyl radical containing one or more heteroatoms selected from the group consisting of O, $NR_7$, S, and $SiR_8R_9$. Preferably, "A" may independently be a substituted or unsubstituted $C_1$ to $C_3$ linear alkyl radical; one or more heteroatoms selected from the group consisting of O, $NR_7$, S and $SiR_8R_9$; or, a substituted or unsubstituted $C_1$ to $C_3$ linear alkyl radical containing one or more heteroatoms selected from the group consisting of O, $NR_7$, S, and $SiR_8R_9$. Where "A" is substituted, it may be substituted with one or more selected from the group consisting of a $C_1$ to $C_6$ linear alkyl radical, and a $C_6$ to $C_{12}$ aryl radical. Preferably, "A" may be substituted with a $C_1$ to $C_3$ linear alkyl radical or a $C_6$ aryl radical. More preferably, "A" may be substituted with a $C_1$ radical. $R_7$ may be hydrogen, $C_1$ to $C_6$ linear alkyl, for example methyl, or trimethylsilyl. $R_8$ and $R_9$ may independently be $C_1$ to $C_6$ linear alkyl, for example methyl. Preferably, A is a $C_2$ alkyl radical containing an S atom. The structure of "A" as a $C_2$ alkyl radical containing an S atom is presented below.

A

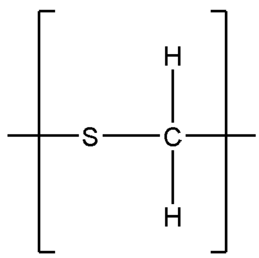

The silane-containing carboxyl groups may be present as a carboxylate of the Formula (II):

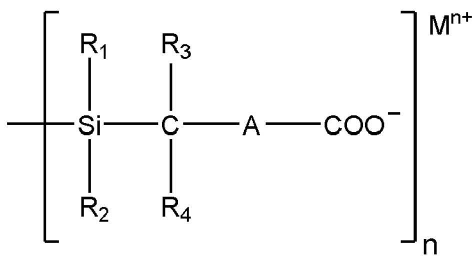

(II)

wherein:

$R_1$ and $R_2$ are as defined above for Formula (I);
$R_3$ and $R_4$ are as defined above for Formula (I);
A is as defined above for Formula (I);
M is a metal or semi-metal of valency 1 to 4, for example, Li, Na, K, Mg, Ca, Zn, Fe, Co, Ni, Al, Nd, Ti, Sn, Si, Zr, V, Mo or W; and
n is an integer from 1 to 4.

In the compounds of Formula (II), M may be Li and n may be 1.

The further definitions of $R_1$, $R_2$, $R_3$, $R_4$, $R_7$, $R_8$ and $R_9$ in Formula (II) are the same as those above for Formula (I).

The functionalised first SBR may be obtainable by reaction of the SBR copolymer with one or more functionalising reagents in the form of silalactones. The silalactones may be compounds of the Formula (III):

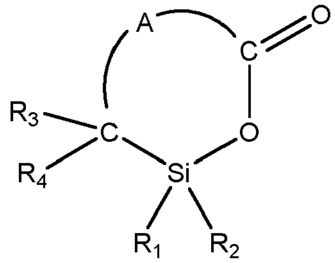

(III)

wherein

$R_1$ and $R_2$ are as defined above for Formula (I);
$R_3$ and $R_4$ are as defined above for Formula (I); and,
A is as defined above for Formula (I).

The further definitions of $R_1$, $R_2$, $R_3$, $R_4$, $R_7$, $R_8$ and $R_9$ in Formula (III) are as described above for Formula (I).

Advantageously, the silalactones of Formula (III) may be one or more selected from the group consisting of 2,2-dimethyl-1-oxa-2-silacyclohexan-6-one, 2,2,4-trimethyl-I-oxa-2-silacyclohexan-6-one, 2,2,5-trimethyl-1-oxa-2-silacyclohexan-6-one, 2,2,4,5-tetramethyl-1-oxa-2-silacyclohexan-6-one, 2,2-diethyl-1-oxa-2-silacyclohexan-8-one, 2,2-diethoxy-1-oxa-2-silacyclohexan-6-one, 2,2-dimethyl-1,4-dioxa-2-silacyclohexan-6-one, 2,2,5-trimethyl-1,4-dioxa-2-silacyclohexan-6-one, 2,2,3,3-tetramethyl-1,4-dioxa-2-silacyclohexan-6-one, 2,2-dimethyl-1-oxa-4-thia-2-silacyclohexan-6-one, 2,2-diethyl-1-oxa-4-thia-2-silacyclohexan-6-one, 2,2-diphenyl-1-oxa-4-thia-2-silacyclonexan-6-one, 2-methyl-2-ethenyl-1-oxa-4-thia-2-silacyclohexan-6-one, 2,2,5-trimethyl-1-oxa-4-thia-2-silacyclohexan-6-one, 2,2-dimethyl-1-oxa-4-aza-2-silacyclohexan-6-one, 2,2,4-trimethyl-1-oxa-4-aza-2-silacyclohexan-6-one, 2,4-dimethyl-2-phenyl-1-oxa-4-aza-2-silacyclohexan-6-one, 2,2-dimethyl-4-trimethylsilyl-1-oxa-4-aza-2-silacyclohexan-8-one, 2,2-diethoxy-4-methyl-1-oxa-4-aza-2-silacyclohexan-6-one, 2,2,4,4-tetramethyl-1-oxa-2,4-disilacyclohexan-8-one, 3,4-dihydro-3,3-dimethyl-1H-2,3-benzoxasilin-1-one, 2,2-dimethyl-1-oxa-2-silacyclopentan-5-one, 2,2,3-trimethyl-1-oxa-2-silacyclopenten-5-one, 2,2-dimethyl-4-phenyl-1-oxa-2-silacyclopentan-5-one, 2,2,4-(tert-butyl)-1-oxa-2-silacyclopentan-5-one, 2-methyl-2-(2-propen-1-yl)-1-oxa-2-silacyclopentan-5-one, 1,1-dimethyl-2,1-benzoxasilol-3(1H)-one, 2,2-dimethyl-1-oxa-2-silacycloheptan-7-one. Preferably, the silalactone of Formula (III) is 2,2-dimethyl-1-oxa-4-thia-2-silacyclohexan-6-one. The structure of 2,2-dimethyl-1-oxa-4-thia-2-silacyclohexan-6-one is presented below.

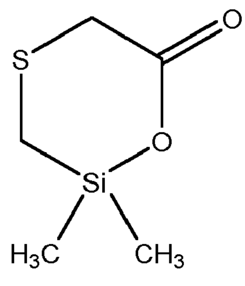

The silane-containing carboxyl group may be bonded to the SBR copolymer via one or more divalent structural elements of the Formula (V):

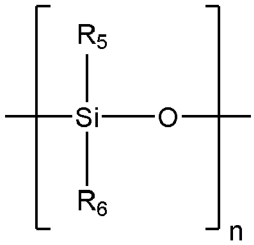

(V)

wherein

n is an integer from 3 to 6;

$R_5$, $R_6$ are the same or different and are each independently a hydrogen, alkyl, cycloalkyl, aryl, alkaryl, or aralkyl radical;

which may contain one or more heteroatoms, preferably wherein the heteroatoms are one or more selected from the group consisting of O, N, S or Si.

When the divalent structural element is present, the SBR copolymer is bonded at the silicon end of the divalent structural element according to the below:

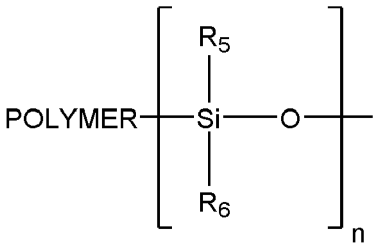

The silane-containing carboxyl group of Formula (I) or (II) is bonded at the oxygen end of the divalent structural element of Formula (V), when the divalent structural element is present.

The divalent structural elements of the Formula (V) may be derived from cyclosiloxanes, such as cyclosiloxanes of the Formula (IV):

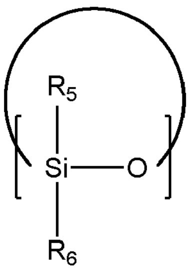

(IV)

wherein

n is as defined above for Formula (V);

$R_5$, $R_6$ are as defined above for Formula (V).

$R_5$ and $R_6$ may each independently a hydrogen, $C_1$ to $C_{12}$ linear or branched alkyl, $C_3$ to $C_{12}$ cycloalkyl, $C_6$ to $C_{12}$ aryl, $C_7$ to $C_{14}$ aralkyl, or a $C_7$ to $C_{14}$ alkaryl radical. Preferably, $R_5$ and $R_6$ may each independently be a $C_1$ to $C_6$ linear or branched alkyl, preferably, $C_1$ to $C_3$ linear alkyl, more preferably a methyl radical.

The divalent structural elements of the Formula (V) may be derived from one or more selected from the group consisting of hexamethylcyclotrisiloxane, octamethylcyclotetrasiloxane, decamethylcyclopentasiloxane and dodecamethylcyclohexasiloxane. Preferably, the divalent structural element is derived from hexamethylcyclotrisiloxane.

In a preferred embodiment, $R_1$ and $R_2$ may each independently be a methyl, tert-butyl, prop-1-enyl, ethoxy, or phenyl radical, $R_3$ and $R_4$ may each independently be a hydrogen or methyl radical, A is a $C_2$ alkyl radical containing an S atom, which is bonded to the copolymer by the divalent structural element according to Formula (V), wherein $R_5$ and $R_6$ are

$C_1$ to $C_3$ linear alkyl radicals and n is 3.

It is particularly advantageous for the SBR copolymer to be terminated with carboxyl groups derived from 2,2-dimethyl-1-oxa-4-thia-2-silacyclohexan-6-one that is bonded to the polymer via a divalent structural element derived from hexamethylcyclotrisiloxane. In this embodiment, the silane-containing carboxyl group of Formula (I) (having $R_1$, $R_2$, $R_3$ and $R_4$ as methyl radicals and "A" as the $C_2$ alkyl radical containing an S atom shown above) is bonded to the copolymer by the divalent structural element according to Formula (V), wherein $R_5$ and $R_6$ are methyl radicals and n is 3.

The synthesis of SBR copolymers terminated with silane-containing carboxyl groups and the compounds of Formulae (I) to (V) above is discussed in detail in, for example, International patent application number WO 2014/173706 A1.

The rubber composition may comprise a further elastomer. The further elastomer may be one or more selected from the group consisting of natural rubber, polybutadiene, synthetic polyisoprene, butadiene copolymers, isoprene copolymers and mixtures thereof.

More preferably the diene elastomer is natural rubber or a second styrene and butadiene copolymer (second SBR). The second styrene and butadiene copolymer may have a glass transition temperature ($T_g$) of from -60°C to -25°C, for example -60°C, -55°C, - 50°C, -45°C, -40°C, -35°C, -30°C, or -25°C. The second SBR may have a styrene content of from 30 to 40% by weight of the second SBR, preferably 35% by weight of the second SBR, and a vinyl content of from 20 to 30% by weight of the second SBR, preferably 26% by weight of the second SBR. The second SBR may not be functionalised.

The further elastomer, which is preferably the second SBR defined above, may be present in an amount of up to 60 phr, preferably from 5 to 50 phr, from 10 to 55 phr, more preferably from 15 to 30 phr, for example, 15, 20, 25, or 30 phr.

*Filler system*

The rubber composition further comprises an inorganic reinforcing filler, which is a silica ($SiO_2$). The silica has a CTAB surface area of from 150 $m^2g^{-1}$ to 190 $m^2g^{-1}$, preferably from 154 to 180 $m^2g$-1. The silica is present in an amount of at least 60 phr, preferably from 70 to 100 phr, for example 70, 75, 80, 85, 90, 95 or 100 phr.

The rubber composition may comprise a further (second) silica, which may be a very low surface area silica. The second silica may have a CTAB surface area of up to 100 $m^2g^{-1}$, preferably from 70 to 110 $m^2g$-1. The second silica may be present in an amount of from 1 to 20 phr, more preferably from 8 to 12 phr, for example 8, 9, 10, 11, or 12 phr.

The rubber composition may comprise additional fillers (i.e. fillers in addition to the inorganic reinforcing filler), such as carbon black. The carbon black may be furnace black, channel blacks, and lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. A specific example of the carbon black in the rubber compositions of the present invention is CORAX® N234 by Orion Engineered Carbons. The amount of carbon black that the rubber compositions of the present invention comprises is not particularly limited, but may be from 1 to 20 phr, preferably from 8 to 12 phr for example, 8, 9, 10, 11, or 12 phr.

*Plasticizer system*

The rubber composition comprises a plasticizer system. As used herein, the term "plasticizer system" collectively refers to the ingredients in the rubber composition which are conventionally known in the art to be plasticizers, for examples resins and liquid plasticizers/oils.

The rubber compositions comprise a terpenic resin. Terpenic resins include resins that are a mixture of terpene monomers (referred to herein as a heteropolymer), or a terpene homopolymer, wherein the terpene homopolymer may be an α-pinene homopolymer. They may be, for example an oligoterpene resin (i.e., a resin prepared from a terpene as the sole monomer), a terpene hydrocarbon resin (i.e., a resin prepared from a terpene and non-terpene hydrocarbon monomer(s)), and/or a terpene phenolic resin (i.e., a resin prepared from a terpene and phenolic compound). The basic molecular formula of terpenes are multiples of $(C_5H_8)_n$ where n is the number of linked isoprene units and is greater than 1. Examples of terpenes suitable for use in the terpenic resin include, without limitation, isoprene, limonene, terpene, α-pinene, β-pinene, δ-3 carene, β-phellandrene and pyrolysates of α-pinene, β-pinene, δ-3 carene, δ-2 carene, turpentine, and combinations thereof. For example terpenic resin may comprise α-pinene or a mixture of α-pinene and β-pinene monomers. The terpenic resin may be substantially free of limonene, wherein the amount of limonene is less than 10 wt%, preferably less than 5 wt% and more preferably less than 1 wt% based upon the total amount of the terpenic resin. Any terpenic resin that fulfils the glass transition temperature requirement can be used in the present invention. In preferred embodiments, the terpenic resin comprises a mixture of α-pinene and β-pinene monomers wherein limonene is present in an amount of less than 10 wt%. Suitable terpenic resins include Kraton Silvatraxx 8115.

The terpenic resin has a glass transition temperature ($T_g$) of at least 30°C. Preferably the terpenic resin has a $T_g$ of from 50 to 80°C, preferably from 60 to 70°C, for example, 60, 61, 62, 63, 64, 65, 66, 67, 68, 69 or 70°C. In a specific embodiment, the terpenic resin has a $T_g$ of 66°C.

The present inventors have discovered that the compatibility and miscibility between the low $T_g$ elastomer and the terpenic resin is improved when the amount of the terpenic resin is high and, in particular when the ratio of the amount of terpenic resin to the amount of the first elastomer is high, which provides enhanced wet performance and rolling resistance balance. Accordingly, the terpenic resin is present in the amount of at least 30 phr, preferably from 30 to 70 phr, more preferably from 40 to 60 phr, most preferably 50 phr. The ratio of the amount of terpenic resin in phr to the total amount of the first SBR is at least 0.5:1, preferably from 0.5:1 to 2:1, more preferably from 0.55:1 to 1.5:1, for example 0.55:1, 0.6:1, 0.65:1, 0.7:1, 0.75:1, 0.8:1, 0.85:1, 0.9:1, 0.95:1, 1:1, 1.05:1, 1.1:1, 1.15:1, 1.2:1, 1.25:1, 1.3:1, 1.35:1, 1.4:1, 1.45:1, or 1.5:1. In a specific embodiment, the ratio of the amount of terpenic resin in phr to the amount of the first SBR is from 0.55:1 to 0.6:1, for example 0.55:1, 0.56:1, 0.57:1, 0.58:1, 0.59:1, or 0.6:1. The ratio of the amount of terpenic resin in phr to the total amount of the one or more elastomers in the elastomer system may be from 0.4:1 to 0.8:1, preferably from 0.4:1 to 0.6:1, most preferably 0.5:1.

A weight miscible fraction of the resin in the elastomer system (as measured by the method recited in the examples) may be at least 0.18, preferably from 0.2 to 0.8, more preferably from the 0.25 to 0.5, for example 0.25, 0.3, 0.35, 0.4, 0.45, or 0.5.

In addition to the above, the present inventors have discovered that the enhanced wet performance and rolling resistance balance of the present invention may be provided by only including a single resin in the plasticizer system. Accordingly, the rubber composition may comprise a single resin and/or may not comprise a further resin. The further resins that the rubber composition may not comprise include a further terpenic resin, a rosinic resin and/or a $C_5$ hydrocarbon resin. In other words, the only resin in the rubber composition may be the terpenic resin or the composition may consist of a terpenic resin.

In particular, the present inventors have discovered that the advantages of the present invention may not be achieved, or may not be achieved to the same extent, when a $C_5$ hydrocarbon resin is present in the plasticizer system. Accordingly, the rubber composition may not comprise a $C_5$ hydrocarbon resin. The term "Cs hydrocarbon resin" refers to a resin obtained by polymerisation of a cracked naphtha feed that contains $C_5$ monomers. $C_5$ monomers include olefins, linear conjugated diolefins and cyclic conjugated diolefins. Other monomers may additionally be present in the feed and these include, but are not limited to, dicyclopentadiene (DCPD). $C_5$ resins may be obtained by co-polymerisation of $C_5$ monomers and dicyclopentadiene (DCPD) monomers or the feed used to provide the $C_5$ resin may exclude any DCPD monomer. The $C_5$ resin may be "partially hydrogenated" meaning that the resin component contains less than 100% olefinic protons, which may be determined by $^1H$ NMR spectroscopy.

The plasticizer system may further comprise a liquid plasticizer. The liquid plasticizer may be one or more selected from the group consisting of liquid diene polymers, polyolefinic oils, naphthenic oils, paraffinic oils, DAE oils, MES (Medium Extracted Solvates) oils, TDAE (Treated Distillate Aromatic Extracts) oils, RAE oil (Residual Aromatic Extract oil), TRAE oil (Treated Residual Aromatic Extract) and SRAE oil (Safety Residual Aromatic Extract oil), mineral oils, vegetable oils, ether plasticizers, ester plasticizers, preferably RAE oil, oleates such as octyl oleate or 2-ethylhexyl oleate, phosphate plasticizers, sulfonate plasticizers and mixtures thereof. Most preferably, the liquid plasticizer is (e.g. consists of) TDAE oils.

The present inventors have discovered that the enhanced compatibility and miscibility of the elastomers and the resins may be provided without the need for a large amount of liquid plasticizer. Accordingly, the liquid plasticizer, preferably TDAE oils, may be present in an amount of less than 15 phr, preferably from 1 to 10 phr, more preferably from 2 to 6 phr. A ratio of the amount of terpenic resin in phr to the amount of liquid plasticizer in phr is at least 5:1, preferably from 5:1 to 30:1, more preferably from 8:1 to 25:1, for example 8:1, 10:1, 15:1, 20:1, or 25:1. The liquid plasticizer may consist of TDAE oils present in the amounts and ratios recited above.

*Additional components*

In addition to the components described above, the rubber compositions may comprise additional components that the skilled person would include in order to prepare rubber compositions that are suitable in the preparation of pneumatic tyres. These include, for example, vulcanising agents (such as sulphur), vulcanisation accelerators, vulcanisation accelerator auxiliaries, silane coupling agents, anti-degradation agents (such as antioxidants or anti-ozonants), waxes, and processing agents.

*Particularly preferred embodiments*

In a particularly preferred embodiment of the rubber composition of the present invention:

the first SBR is functionalised with one or more terminal silane-containing carboxyl groups, preferably according to Formula (I), has a $T_g$ of from -70°C to -50°C and is present in an amount of from 45 to 90 phr;
the elastomer system further comprises a second SBR having a $T_g$ of from -60°C to -25°C and present in an amount of from 10 to 55 phr,
the silica has a CTAB surface area of from 150 $m^2g^{-1}$ to 190 $m^2g^{-1}$ and is present in an amount of from 70 to 100 phr;
the terpenic resin has a $T_g$ of from 50 to 80°C and is present in an amount of from 40 to 60 phr;
wherein a ratio of the amount of terpenic resin in phr to the amount of the first SBR in phr is from 0.5:1 to 1.5:1;
preferably wherein the rubber composition does not comprise a further resin, and/or preferably wherein the rubber composition does not comprise a $C_5$ hydrocarbon resin.

In a particularly preferred embodiment of the rubber composition of the present invention:

the first SBR is functionalised with one or more terminal silane-containing carboxyl groups, preferably according to Formula (I), has a $T_g$ of from -70°C to -50°C and is present in an amount of from 45 to 90 phr;
the elastomer system further comprises a second SBR having a $T_g$ of from -60°C to -25°C and present in an amount of from 10 to 55 phr,
the silica has a CTAB surface area of from 150 $m^2g^{-1}$ to 190 $m^2g^{-1}$ and is present in an amount of from 70 to 100 phr;
the terpenic resin has a $T_g$ of from 50 to 80°C and is present in an amount of from 40 to 60 phr;
wherein a ratio of the amount of terpenic resin in phr to the total amount of the one or more elastomers in the elastomer system may be from 0.4:1 to 0.8:1, preferably from 0.4:1 to 0.6:1;
preferably wherein the rubber composition does not comprise a further resin, and/or preferably wherein the rubber composition does not comprise a $C_5$ hydrocarbon resin.

In a particularly preferred embodiment of the rubber composition of the present invention:

the first SBR is functionalised with one or more terminal silane-containing carboxyl groups, preferably according to Formula (I), has a $T_g$ of from -70°C to -50°C and is present in an amount of from 45 to 90 phr;
the elastomer system further comprises a second SBR having a $T_g$ of from -60°C to -25°C and present in an amount of from 10 to 55 phr,
the silica has a CTAB surface area of from 150 $m^2g^{-1}$ to 190 $m^2g^{-1}$ and is present in an amount of from 70 to 100 phr;
the terpenic resin has a $T_g$ of from 50 to 80°C and is present in an amount of from 40 to 60 phr;
wherein the plasticizer system further comprises (e.g. consists of) the liquid plasticizer TDAE oils in an amount of from 1 to 10 phr,
wherein a ratio of the amount of terpenic resin in phr to the amount of liquid plasticizer in phr is from 8:1 to 25:1;
preferably wherein the rubber composition does not comprise a further resin, and/or preferably wherein the rubber composition does not comprise a $C_5$ hydrocarbon resin.

*Method of preparation*

In preparing the rubber composition of the present invention, the method for combining each of the components is not limited and any of the methods known to the person skilled in the art may be used. For example, all of the component materials may be blended and kneaded at once or they may be blended and kneaded in multiple steps. For blending and kneading, a kneader such as roll kneader, internal mixer, or Banbury mixer may be used. For moulding the rubber composition into sheet or strip shape, any known moulding machine such as extrusion moulding machine or press moulding machine may be used. The vulcanization conditions for hardening the above rubber composition are not limited and can be any of those known to the person skilled in the art. Typically, however, vulcanization conditions of treatment at 140 to 180° C for 5 to 120 minutes are employed.

*Pneumatic tyres*

In a further aspect, the present invention is directed to pneumatic tyres. The pneumatic tyres are not particularly limited and may be any tyres used on passenger vehicles such as cars, motorbikes, and commercial goods vehicles, for example. The pneumatic tyres may be suited to any type of climate, weather or road conditions and may be, for example, a summer tyre, a winter tyre, a snow tyre, an all-season tyre, a sports tyre, or a high performance tyre.
In view of the above, the present invention is directed to a pneumatic tyre comprising the rubber composition of the present invention and/or a pneumatic tyre prepared from the rubber composition of the present invention.
In a further aspect, the present invention is directed to the use of the rubber composition in the manufacture of a pneumatic tyre.

The part of the tyre in which the rubber composition of the present invention is used is not limited and may be appropriately selected depending on the intended purpose. For example, the rubber composition may be used in the tread, base treads, side walls, side-reinforcing rubbers, bead fillers, etc. Among these, the rubber composition is advantageously used in the tread component.

Regarding the method for producing the tyre, any method known to those skilled in the art can be used. For example, components generally used in tyre production, such as a carcass layer, a belt layer, a tread layer and the like formed of at least one selected from the group consisting of an unvulcanised rubber composition and a cord are layered in order on a drum for tyre formation and then the drum is removed to give a green tyre. Next, the green tyre is vulcanised under heat according to an ordinary method to produce a desired tyre.

**EXAMPLES**

The present invention will now be described by the following non-limiting examples.

Measurement methods

*Glass transition temperature ($T_g$)*

Glass transition temperatures ($T_g$) were measured by DSC (Differential Scanning Calorimetry) according to standard ASTM D3418 (1999).

Loss *Factor (tan δ)*

The loss factor (tangent δ, or tan δ) at different temperatures is used to evaluate rolling resistance and wet traction. Tan δ at lower temperatures is an indicator of wet traction. Tan δ at 60°C is thus an indicator of rolling resistance (RR). Dynamic physical testing to determine tan δ was conducted in accordance with the ISO 4664 standard.

*Miscibility of polymer and resin measured by Fox Theory using solvent casting*

Samples (7.5 mg) were prepared by solvent casting the polymer and resin to obtain an homogeneous film. The samples were analysed by dynamic scanning calorimetry (DSC) and the weight fraction of the resin in the rubber ($W_{resin}$) was calculated using the Fox equation:

$$\frac{1}{T_{g_blend}} = \frac{W_{resin}}{T_{g_resin}} + \frac{1 - W_{resin}}{T_{g_rubber}}$$

wherein:

$T_{g_blend}$ = $T_g$ of rubber/resin miscible phase
$T_{g_resin}$ = $T_g$ of resin
$T_{g_rubber}$ = $T_g$ of rubber
$W_{resin}$ = Weight fraction of resin in the rubber.

Such methods are described in, for example, Haddadin et al, Pharmaceutical Development and Technology, 2009, 14(1), pages 19-27 and Jang et al, Netsu Sokutei, W39, 33-37.

*Cetyltrimethylammonium bromide (CTAB) adsorption method*

The surface area of the fillers was measured by the CTAB method according to ASTM D6845.

General method

Tyre compounds were prepared according to the following general method. The following components were compounded in the amounts recited in Table 1 below. In preparing the rubber compositions, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer, or Banbury mixer may be used. For moulding

the rubber composition into sheet or strip shape, any known moulding machine such as extrusion moulding machine or press moulding machine may be used. The values in Table 1 are all expressed in phr. Table 2 shows the measurement of various mechanical properties performed on test pieces of tread prepared using the compositions of Table 1.

**Table 1**

| Component | Comp. Ex. 1 | Example 1 | Example 2 |
|---|---|---|---|
| SBR1 (1) | 50 | 50 | 85 |
| SBR2 (2) | 50 | 50 | 15 |
| Liquid plasticizer (TDAE oil) | 2.5 | 2.5 | 4.25 |
| Terpenic resin (3) | | 50 | 50 |
| Hydrocarbon resin (4) | 50 | 0 | 0 |
| STD Silica (5) | 80 | 80 | 80 |
| VLSA Silica (6) | 10 | 10 | 10 |
| Carbon black (7) | 10 | 10 | 10 |
| Silane (8) | 7.0 | 7.0 | 7.0 |
| ZnO | 2 | 2 | 2 |
| Stearic acid | 1 | 1 | 1 |
| Wax (9) | 2.1 | 2.1 | 2.1 |
| Zn salts (10) | 2 | 2 | 2 |
| Sulfur | 1.55 | 1.55 | 1.55 |
| DPG (11) | 2.2 | 2.2 | 2.2 |
| TMQ (12) | 0.5 | 0.5 | 0.5 |
| TBzTD (13) | 0.20 | 0.20 | 0.20 |

(1) SBR1: $T_g$ -61°C, 10% styrene, 37% vinyl, functionalised with silane-containing carboxyl groups and prepared using the methods described in WO 2014/173706 A1. The amount of SBR1 in Table 1 does not include the amount of oil present, which is shown separately (5 phr Treated Distillate Aromatic Extract (TDAE) oil)
(2) SBR2: $T_g$ -55°C, 35% styrene, 26% vinyl, dry
(3) Terpenic resin: $T_g$ 66°C, MW 1010 Da, softening point 115°C, aromaticity 1 (Kraton Sylvatraxx 8115)
(4) Hydrogenated resin: $C_5$-Hydrocarbon Resin: Glass transition: 69-79°C, MW: 650-750 g/mol (Eastman Imperia E1780)
(5) STD Silica: Standard silica characterised by CTAB = 154-180; NSA = 160-200 (Evonik Ultrasil VN3)
(6) VLSA Silica: VLSA Silica: Very low surface area silica characterised by characterized by: CTAB = 65-95; NSA = 70-110 (Solvay Zeosil 1085GR)
(7) Carbon black: Corax® N234
(8) Silane: Evonik Industries AG Si 69®
(9) Wax: Paraffinic wax
(10) Zn salts: Zinc salts of high MW fatty acids (BUNA FX VP 4119)
(11) DPG: 1,3-diphenyl guanidine
(12) TMQ: 2,2,4-trimethyl-1,2-dihydroquinoline
(13) TBzTD: Tetrabenzylthiuram disulphide

**Table 2**

| Parameter | Comp. Ex. 1 | Example 1 |
|---|---|---|
| Tan $\delta$ (0°C) | 0.924 | 0.982 |
| Tan $\delta$ (60°C) | 0.230 | 0.198 |
| Tan $\delta$ 0°C / tan $\delta$ 60°C | 4.0 | 5.0 |
| Weight fraction of resin in rubber (wmf) | 0.170 | 0.260 |

(continued)

| Parameter | Comp. Ex. 1 | Example 1 |
|---|---|---|
| | | |
| WET (Tan δ (0°C)) | 100 | 101 |
| RR (Tan δ (60°C)) | 100 | 105 |

As shown in Table 2, changing the resin from a hydrogenated hydrocarbon resin to a terpenic resin increases the weight miscible fraction of the resin in the polymer, improving the compatibility and miscibility of the resin and polymer. A result of this is an increase in the Tan δ (0°C) value, indicating enhanced wet performance, and a decrease in Tan δ (60°C), indicating improved rolling resistance.

The use of low $T_g$ polymers can negatively impact wet performance. The present inventors have discovered that combining a low $T_g$ polymer with a high resin amount improves the compatibility and miscibility of the resin with the polymer, which, in turn, improves the dispersion of the fillers in the rubber composition. This effect is enhanced by the use of a terpenic resin compared to a $C_5$ hydrocarbon resin. It leads to an improved balance of wet performance and rolling resistance in tyres prepared using the rubber composition.

## Claims

**1.** A rubber composition for a pneumatic tyre comprising:

an elastomer system comprising one or more elastomers, wherein the elastomer system comprises a first copolymer of styrene and butadiene (SBR) having a glass transition temperature ($T_g$) of from -90°C to -30°C and present in an amount of at least 40 phr, wherein the first SBR is functionalised with one or more functional groups selected from the group consisting of silane, alkoxysilane, aminosilane, silane-containing carboxyl, and silanol groups;
a filler system comprising a first silica having a CTAB surface area of at least 150 $m^2g^{-1}$; and,
a plasticizer system comprising a resin which is a terpenic resin having a glass transition temperature ($T_g$) of at least 30°C present in an amount of at least 30 phr;
wherein a ratio of the amount of the terpenic resin in phr to the amount of the first SBR in phr is at least 0.5:1.

**2.** The rubber composition according to claim 1, wherein the ratio of the amount of the terpenic resin in phr to the amount of the first SBR in phr is from 0.5:1 to 2:1, preferably from 0.55:1 to 1.5:1.

**3.** The rubber composition according to claim 1 or claim 2, wherein the ratio of the amount of the terpenic resin in phr to the amount of the first SBR in phr is from 0.55:1 to 0.6:1.

**4.** The rubber composition according to any one of the preceding claims, wherein a ratio of the amount of the terpenic resin in phr to the total amount of the one or more elastomers in the elastomer system may be from 0.4:1 to 0.8:1, preferably from 0.4:1 to 0.6:1, most preferably 0.5:1.

**5.** The rubber composition according to any one of the preceding claims, wherein the first SBR has a $T_g$ of from -80°C to -40°C, preferably from -70°C to -50°C, more preferably -61°C.

**6.** The rubber composition according to any one of the preceding claims, wherein the first SBR is present in an amount of from 45 to 90 phr, preferably from 65 to 85 phr.

**7.** The rubber composition according to any one of the preceding claims, wherein the first SBR is functionalised with one or more silane-containing carboxyl groups, preferably wherein the first SBR is functionalised with one or more terminal a silane-containing carboxyl groups having a structure according to Formula (I):

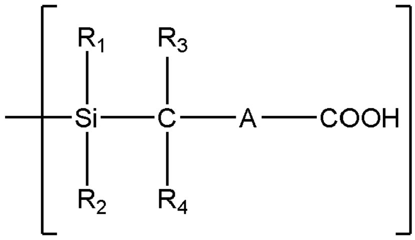

(I)

wherein:

$R_1$ and $R_2$ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
$R_3$ and $R_4$ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkylene radical; one or more heteroatoms selected from the group consisting of O, $NR_7$, S and $SiR_8R_9$; or, an alkylene radical containing one or more heteroatoms, preferably wherein the heteroatoms are one or more selected from the group consisting of O, $NR_7$, S, and $SiR_8R_9$..

8. The rubber composition according to any one of the preceding claims, wherein the elastomer system further comprises one or more elastomers selected from the group consisting of natural rubber, polybutadiene, synthetic polyisoprene, butadiene copolymers, isoprene copolymers, preferably wherein the elastomer system further comprises a second elastomer, which is natural rubber or a second copolymer of styrene and butadiene (SBR) having a glass transition temperature ($T_g$) of from -60°C to -25°C.

9. The rubber composition according to any one of the preceding claims, wherein the filler system further comprises a second silica having a CTAB surface area of up to 100 $m^2g^{-1}$.

10. The rubber composition according to any one of the preceding claims, wherein the terpenic resin has a glass transition temperature ($T_g$) of from 50 to 80°C, preferably from 60 to 70°C.

11. The rubber composition according to any one of the preceding claims, wherein the terpenic resin is present in the amount of from 30 to 70 phr, preferably from 40 to 60 phr.

12. The rubber composition according to any one of the preceding claims, wherein the plasticizer system further comprises a liquid plasticizer, preferably wherein the liquid plasticizer is one or more selected from the group consisting of liquid diene polymers, polyolefinic oils, naphthenic oils, paraffinic oils, DAE oils, MES (Medium Extracted Solvates) oils, TDAE (Treated Distillate Aromatic Extracts) oils, RAE oil (Residual Aromatic Extract oil), TRAE oil (Treated Residual Aromatic Extract) and SRAE oil (Safety Residual Aromatic Extract oil), mineral oils, vegetable oils, ether plasticizers, ester plasticizers, preferably RAE oil, oleates such as octyl oleate or 2-ethylhexyl oleate, phosphate plasticizers, sulfonate plasticizers, preferably wherein the liquid plasticizer is TDAE oils.

13. The rubber composition according to claim 12, wherein the liquid plasticizer is present in an amount of less than 15 phr, preferably from 1 to 10 phr, more preferably from 2 to 6 phr.

14. The rubber composition according to claim 12 or 13, wherein a ratio of the amount of terpenic resin in phr to the amount of the liquid plasticizer in phr is at least 5:1, preferably from 5:1 to 30:1, more preferably from 8:1 to 25:1.

15. The rubber composition according to any one of the preceding claims, wherein the rubber composition does not comprise a further resin, and/or wherein the rubber composition does not comprise a $C_5$ hydrocarbon resin.

16. The rubber composition according to any one of the preceding claims, wherein:

the first SBR is functionalised with one or more terminal silane-containing carboxyl groups, has a $T_g$ of from -70°C to -50°C and is present in an amount of from 45 to 90 phr;
the elastomer system further comprises a second copolymer of styrene and butadiene (SBR) having a $T_g$ of from

-60°C to -25°C and present in an amount of from 10 to 55 phr, the silica has a CTAB surface area of from 150 $m^2g^{-1}$ to 190 $m^2g^{-1}$ and is present in an amount of from 70 to 100 phr; the terpenic resin has a $T_g$ of from 50 to 80°C and is present in an amount of from 40 to 60 phr; wherein a ratio of the amount of terpenic resin in phr to the amount of the first SBR in phr is from 0.5:1 to 1.5:1; preferably wherein the rubber composition does not comprise a further resin, and/or preferably wherein the rubber composition does not comprise a $C_5$ hydrocarbon resin.

**17.** The rubber composition according to any one of the preceding claims, wherein:

the first SBR is functionalised with one or more terminal silane-containing carboxyl groups, has a $T_g$ of from -70°C to -50°C and is present in an amount of from 45 to 90 phr; the elastomer system further comprises a second copolymer of styrene and butadiene (SBR) having a $T_g$ of from -60°C to -25°C and present in an amount of from 10 to 55 phr, the silica has a CTAB surface area of from 150 $m^2g^{-1}$ to 190 $m^2g^{-1}$ and is present in an amount of from 70 to 100 phr; the terpenic resin has a $T_g$ of from 50 to 80°C and is present in an amount of from 40 to 60 phr; wherein a ratio of the amount of terpenic resin in phr to the total amount of the one or more elastomers in the elastomer system is from 0.4:1 to 0.6:1; preferably wherein the rubber composition does not comprise a further resin, and/or preferably wherein the rubber composition does not comprise a $C_5$ hydrocarbon resin.

**18.** The rubber composition according to any one of the preceding claims, wherein:

the first SBR is functionalised with one or more terminal silane-containing carboxyl groups, has a $T_g$ of from -70°C to -50°C and is present in an amount of from 45 to 90 phr; the elastomer system further comprises a second copolymer of styrene and butadiene (SBR) having a $T_g$ of from -60°C to -25°C and present in an amount of from 10 to 55 phr, the silica has a CTAB surface area of from 150 $m^2g^{-1}$ to 190 $m^2g^{-1}$ and is present in an amount of from 70 to 100 phr; the terpenic resin has a $T_g$ of from 50 to 80°C and is present in an amount of from 40 to 60 phr; wherein the plasticizer system further comprises the liquid plasticizer TDAE oils in an amount of from 1 to 10 phr, wherein a ratio of the amount of terpenic resin in phr to the amount of liquid plasticizer in phr is from 8:1 to 25:1; preferably wherein the rubber composition does not comprise a further resin, and/or preferably wherein the rubber composition does not comprise a $C_5$ hydrocarbon resin.

**19.** A pneumatic tyre comprising or prepared from the rubber composition according to any one of claims 1 to 18.

**20.** Use of the rubber composition according to any one of claims 1 to 18 in the manufacture of a pneumatic tyre.

Europäisches Patentamt
European Patent Office
Office européen des brevets

# EUROPEAN SEARCH REPORT

Application Number
EP 24 19 2892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 643 400 B1 (MICHELIN & CIE [FR]) 6 May 2020 (2020-05-06)<br>* claims *<br>* composition C1; table 1 * | 1,2,4-6, 9-12,15, 19,20 | INV.<br>B60C1/00<br>C08L15/00<br>C08L47/00<br>C08K3/36<br>ADD.<br>C08L7/00<br>C08L9/00<br>C08L91/00 |
| X | US 2024/174844 A1 (NISHIKAWA YUMA [JP]) 30 May 2024 (2024-05-30)<br>* claims *<br>* comparative examples 1, 3, 5, 11, 13; tables 1-2 *<br>* examples 2-4,6-7,12-14 * | 1-6, 8-15,19, 20 | |
| E | EP 4 438 325 A1 (BRIDGESTONE EUROPE NV SA [BE]) 2 October 2024 (2024-10-02)<br>* comparative examples 1-3 *<br>* claims * | 1,2, 4-15,19, 20 | |
| E | EP 4 438 326 A1 (BRIDGESTONE EUROPE NV SA [BE]) 2 October 2024 (2024-10-02)<br>* comparative examples 1, 2-5 * | 1-8, 10-15, 19,20 | TECHNICAL FIELDS SEARCHED (IPC)<br>B60C<br>C08L<br>C08K |
| A | US 2024/240002 A1 (KAZARIYA AYAKI [JP]) 18 July 2024 (2024-07-18)<br>* paragraph [0057] *<br>* examples *<br>* claims * | 1-20 | |
| A,D | WO 2014/173706 A1 (LANXESS DEUTSCHLAND GMBH [DE]) 30 October 2014 (2014-10-30)<br>* claims; examples * | 1-20 | |
| A | EP 4 056 644 A1 (GOODYEAR TIRE & RUBBER [US]) 14 September 2022 (2022-09-14)<br>* examples 1-3 * | 1-20 | |

The present search report has been drawn up for all claims

1

| Place of search | Date of completion of the search | Examiner |
|---|---|---|
| Munich | 16 January 2025 | Baekelmans, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 2892

This annex lists the patent family members relating to the patent documents cited in the above-mentioned European search report. The members are as contained in the European Patent Office EDP file on
The European Patent Office is in no way liable for these particulars which are merely given for the purpose of information.

16-01-2025

| Patent document cited in search report | | Publication date | Patent family member(s) | | | Publication date |
|---|---|---|---|---|---|---|
| EP 2643400 | B1 | 06-05-2020 | CN | 103228718 | A | 31-07-2013 |
| | | | EA | 201390777 | A1 | 30-09-2013 |
| | | | EP | 2643400 | A1 | 02-10-2013 |
| | | | FR | 2968005 | A1 | 01-06-2012 |
| | | | JP | 5837086 | B2 | 24-12-2015 |
| | | | JP | 2013544935 | A | 19-12-2013 |
| | | | US | 2013267640 | A1 | 10-10-2013 |
| | | | WO | 2012069565 | A1 | 31-05-2012 |
| US 2024174844 | A1 | 30-05-2024 | EP | 4378711 | A1 | 05-06-2024 |
| | | | JP | 2024079308 | A | 11-06-2024 |
| | | | US | 2024174844 | A1 | 30-05-2024 |
| EP 4438325 | A1 | 02-10-2024 | EP | 4438325 | A1 | 02-10-2024 |
| | | | WO | 2024199983 | A1 | 03-10-2024 |
| EP 4438326 | A1 | 02-10-2024 | EP | 4438326 | A1 | 02-10-2024 |
| | | | WO | 2024199982 | A1 | 03-10-2024 |
| US 2024240002 | A1 | 18-07-2024 | CN | 117222703 | A | 12-12-2023 |
| | | | EP | 4338978 | A1 | 20-03-2024 |
| | | | JP | 7168029 | B1 | 09-11-2022 |
| | | | JP | 2022174896 | A | 25-11-2022 |
| | | | US | 2024240002 | A1 | 18-07-2024 |
| | | | WO | 2022239491 | A1 | 17-11-2022 |
| WO 2014173706 | A1 | 30-10-2014 | BR | 112015026742 | A2 | 25-07-2017 |
| | | | CN | 105164163 | A | 16-12-2015 |
| | | | EP | 2796471 | A1 | 29-10-2014 |
| | | | EP | 2989129 | A1 | 02-03-2016 |
| | | | ES | 2623628 | T3 | 11-07-2017 |
| | | | HK | 1222187 | A1 | 23-06-2017 |
| | | | HU | E033135 | T2 | 28-11-2017 |
| | | | JP | 6306688 | B2 | 04-04-2018 |
| | | | JP | 2016518492 | A | 23-06-2016 |
| | | | KR | 20160018494 | A | 17-02-2016 |
| | | | MX | 365163 | B | 16-05-2019 |
| | | | MY | 179258 | A | 03-11-2020 |
| | | | PL | 2989129 | T3 | 31-08-2017 |
| | | | RU | 2015150052 | A | 29-05-2017 |
| | | | SG | 11201508109P | A | 27-11-2015 |
| | | | TW | 201504322 | A | 01-02-2015 |
| | | | US | 2016075809 | A1 | 17-03-2016 |
| | | | WO | 2014173706 | A1 | 30-10-2014 |
| EP 4056644 | A1 | 14-09-2022 | CN | 115044113 | A | 13-09-2022 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 24 19 2892

This annex lists the patent family members relating to the patent documents cited in the above-mentioned European search report. The members are as contained in the European Patent Office EDP file on
The European Patent Office is in no way liable for these particulars which are merely given for the purpose of information.

16-01-2025

| Patent document cited in search report | Publication date | Patent family member(s) | Publication date |
|---|---|---|---|
| | | EP 4056644 A1 | 14-09-2022 |
| | | JP 2022138139 A | 22-09-2022 |
| | | US 2023002594 A1 | 05-01-2023 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014173706 A1


### Non-patent literature cited in the description


- **HADDADIN et al.** *Pharmaceutical Development and Technology*, 2009, vol. 14 (1), 19-27
- **JANG et al.** *Netsu Sokutei*, vol. W39, 33-37